# EUROPÄISCHE PATENTANMELDUNG

(11) **EP 1 988 553 A2**
(43) Veröffentlichungstag der Anmeldung: **05.11.2008**
(21) Anmeldenummer: 08008098.9
(22) Anmeldetag: 28.04.2008
(51) Int. Cl.: H01B 7/29

(54) **Gewebeteil**

(30) Priorität: 26.04.2007 DE 102007020077
(71) Anmelder: h.k.o. Isolier- und Textiltechnik GmbH, 46049 Oberhausen (DE)
(72) Erfinder: Machatschke, Rolf, Dr., 45481 Mülheim (DE); Halink, Bert, 4171 KG Groenlo (NL)
(74) Vertreter: Gesthuysen, von Rohr & Eggert

(57) **Zusammenfassung**

Es werden ein Gewebeteil und dessen Herstellung vorgeschlagen. Eine einfache, kostengünstige und schnelle Herstellung wird dadurch ermöglicht, daß eine Seele in einen Schlauchabschnitt eingewebt und gleichzeitig ein Flächenabschnitt seitlich an den Schlauchabschnitt angewebt wird.

## Beschreibung

Die vorliegende Erfindung betrifft ein Gewebeteil gemäß dem Oberbegriff des Anspruchs 1 sowie ein Verfahren zu dessen Herstellung.

Ein Gewebeteil im Sinne der vorliegenden Erfindung ist ein Bauteil, das zumindest teilweise, vorzugsweise vollständig durch Weben hergestellt ist.

Ein Gewebeteil im Sinne der vorliegenden Erfindung dient insbesondere der Hitze- bzw. Wärmeisolierung und/oder Abdichtung, vorzugsweise bei Öfen, Heizungsanlagen oder dergleichen.

Die vorliegende Erfindung bezieht sich insbesondere auf Gewebeteile, die bei höheren oder hohen Temperaturen eingesetzt werden, vorzugsweise von mehr als 200°C, insbesondere von ca. 300°C bis 1100°C oder darüber.

Es ist bekannt, ein Gewebeteil aus einem Gewebestreifen herzustellen. Der Gewebestreifen wird entlang einer Längsmittellinie derart umgeschlagen, daß eine Seele aufgenommen wird. Die umgeschlagenen Randbereiche kommen aufeinander zu liegen und werden miteinander vernäht. Dies erfordert mehrere Herstellungsschritte und ist zeit- und arbeitsaufwendig.

Weiter ist es bereits bekannt, eine Seele zu umflechten. Dies ist jedoch verhältnismäßig aufwendig und gestattet insbesondere nicht die einfache Anformung oder Ausbildung eines Flächenabschnitts bzw. einer Fahne.

Der vorliegenden Erfindung liegt die Aufgabe zugrunde, ein insbesondere fahnenartiges Gewebeteil sowie ein Verfahren zu dessen Herstellung anzugeben, wobei eine einfache, schnelle und kostengünstige Herstellung ermöglicht wird.

Die obige Aufgabe wird durch ein Gewebeteil gemäß Anspruch 1 oder ein Verfahren gemäß Anspruch 15 gelöst. Vorteilhafte Weiterbildungen sind Gegenstand der Unteransprüche.

Ein Gewebeteil mit einer in einen Schlauchabschnitt aufgenommenen Seele zeichnet sich vorschlagsgemäß dadurch aus, daß die Seele in den Schlauchabschnitt eingewebt ist. Unter "Einweben" ist insbesondere zu verstehen, daß der Schlauchabschnitt direkt um die Seele herum gewebt wird. Insbesondere kann so ein separates Einlegen der Seele nach dem Weben entfallen. Dementsprechend wird eine besonders einfache, schnelle und kostengünstige Herstellung ermöglicht.

Besonders bevorzugt wird an den Schlauchabschnitt unmittelbar längsseitig ein Flächenabschnitt angewebt, der sich insbesondere radial anschließt. So kann auf sehr einfache Weise ein insbesondere fahnenprofilartiges Gewebeteil hergestellt werden, das insbesondere als Dichtung o. dgl, einsetzbar ist.

Entsprechend ist es auch möglich, bei gleichzeitigem Weben eines zusätzlichen Schlauchabschnitts und Aufnahme einer zusätzlichen Seele ein sogenanntes Doppel-Keder-Profil, insbesondere in einem einzigen Arbeitsgang, herzustellen,

Insbesondere kann beim Doppel-Keder-Profil das die beiden Schlauchabschnitte verbindende Flächenstück im Gegensatz zum Stand der Technik wesentlich schmaler ausgebildet werden, so daß die von den Schlauchabschnitten mit den darin aufgenommenen Seelen gebildeten Wülste wesentlich enger miteinander verbunden werden können.

Bei der vorschlagsgemäßen Lösung kann insbesondere das beim Stand der Technik erforderliche Vernähen entfallen. Das Gewebeteil ist vorzugsweise also nahtlos ausgeführt.

Weitere Aspekte, Vorteile, Merkmale und Eigenschaften der vorliegenden Erfindung ergeben sich aus den Ansprüchen und der folgenden Beschreibung bevorzugter Ausführungsformern anhand der Zeichnung. Es zeigt:
- Fig. 1: eine schematische Darstellung eines Gewebeteils gemäß einer ersten Ausführungsform; und
- Fig. 2: eine schematische Darstellung eines Gewebeteils gemäß einer zweiten Ausführungsform.

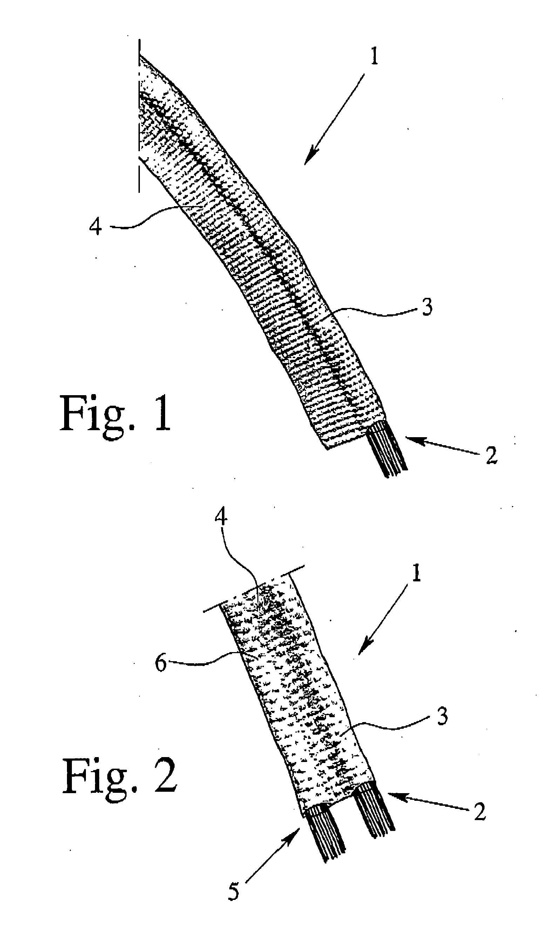

Fig. 1 veranschaulicht in einer schematischen Darstellung ein vorschlagsgemäßes Gewebeteil 1 gemäß einer ersten Ausführungsform.

Bei dem Gewebeteil 1 handelt es sich insbesondere um Endlosmaterial, das insbesondere im wesentlichen band- oder streifenförmig ausgebildet ist.

Das Gewebeteil 1 weist eine Seele 2 und einen Schlauchabschnitt 3 auf. Die Seele 2 ist in dem Schlauchabschnitt 3 aufgenommen.

Der Schlauchabschnitt 3 umgibt die Seele 2 vorzugsweise allseitig.

Die Seele 2 kann grundsätzlich als Schnur oder Packung ausgebildet sein. Besonders bevorzugt wird die Seele 2 aus Kordeln oder Garnen oder Filamenten bzw. Einzelfasern gebildet. Beim Darstellungsbeispiel werden vorzugsweise mehrere mehrfädige Garne eingesetzt, die insbesondere aus Glasfasern oder sonstigen Fasern, besonders bevorzugt aus den gleichen Fasern wie der Schlauchabschnitt 3 und ein Flächenabschnitt 4 bestehen.

Grundsätzlich können jedoch für die Seele 2, den Schlauchabschnitt 3 und/oder den Flächenabschnitt 4 auch unterschiedliche Garne bzw. Fasern eingesetzt werden.

Die Seele 2 wird vorschlagsgemäß in den Schlauchabschnitt 3 eingewebt. Der Schlauchabschnitt 3 wird also direkt um die Seele 2 herum gewebt.

Das Weben des Gewebeteils 1 erfolgt besonders bevorzugt durch Schaftweben. Die Seele 2 wird dann insbesondere über einen separaten Schaft so geführt, daß der Schlauchabschnitt 3 darum herum gewebt wird.

Ein besonderer Vorteil der vorschlagsgemäßen Lösung liegt darin, daß durch Variation der Dicke und/oder Anzahl der zur Bildung der Seele 2 zugeführten Fäden und/oder Garne sehr einfach die Dicke und/oder Härte der Seele 2 bzw. des Schlauchabschnitts 3 bzw. des von dem Gewebeteil 1 gebildeten Wulstes variiert oder angepaßt werden kann.

Weiter weist das Gewebeteil 1 vorzugsweise einen Flächenabschnitt 4 auf, der sich seitlich bzw. längsseitig und/oder radial an den Schlauchabschnitt 3 anschließt. Vorzugsweise ist der Schlauchabschnitt 3 längsseitig durch das Flächenstück 4 geschlossen.

Der Schlauchabschnitt 3 und der Flächenabschnitt 4 sind vorzugsweise gewebt, insbesondere in einem Arbeitsgang bzw. als ein Stück.

Der Schlauchabschnitt 3 ist vorzugsweise rund- oder schlauchgewebt. Das Flächenstück 4 ist insbesondere mit Ripsbindung, besonders bevorzugt Querrips, gewebt. Besonders bevorzugt wird ein Schußfaden von einem einarmigen Greifer geführt und am freien Ende mittels eines Abbindefadens - besonders bevorzugt entlang der freien Längskante des Flächenabschnitts 4 - abgebunden.

Das Weben erfolgt vorzugsweise mit oder aus insbesondere mehrfädigen Garnen.

Der Schlauchabschnitt 3 und der Flächenabschnitt 4 bzw. die verwendeten Garne bestehen vorzugsweise aus ausreichend temperaturbeständigen, insbesondere hochtemperaturbeständigen Fasern, besonders bevorzugt reinen Glasfasern oder Mischungen davon. Jedoch können auch sonstige Mineralfasern, insbesondere Silikatfasern oder Kalziumsilikatfasern oder Mischungen, eingesetzt werden.

Die Fasern sind beim Darstellungsbeispiel hitzebeständig, vorzugsweise zumindest bis 300°C, insbesondere hochtemperaturbeständig, vorzugsweise bis 600°C, insbesondere bis 800°C, ganz besonders bevorzugt bis 1100°C oder mehr.

Ein Vorteil des vorschlagsgemäßen Gewebeteils 1 bzw. vorschlagsgemäßen Verfahrens liegt darin, daß das gesamte Gewebeteil 1 in einem Arbeitsgang bzw. auf einer Webmaschine bzw. einem Webstuhl herstellbar ist, insbesondere also separate Schritte, wie Konfektionieren, Einlegen der Seele 2, Umschlagen und Vernähen eines Gewebestreifens o. dgl., vollständig entfallen können.

Ein weiterer Vorteil liegt darin, daß durch das unmittelbare Anweben des Flächenstücks 4 an den Schlauchabschnitt 3 eine optimale Verbindung und hohe Festigkeit, bedarfsweise auch Steifigkeit erreichbar ist.

Bedarfsweise kann der Flächenabschnitt 4 in seiner Breite und/oder Dicke auch sehr einfach variiert werden oder alternativ auch ganz entfallen.

Das vorschlagsgemäße Gewebeteil 1 ist insbesondere als Dichtung zur Wärme- bzw. Hitzeisolierung, beispielsweise bei einem Ofen, einer Heizungsanlage o. dgl., ausgebildet. Jedoch kann das vorschlagsgemäße Gewebeteil 1 auch für sonstige Zwecke eingesetzt werden.

Beim Darstellungsbeispiel ist das Gewebeteil 1 insbesondere fahnenprofilartig ausgebildet. Jedoch sind auch sonstige Profilformen grundsätzlich möglich.

Fig. 2 zeigt eine zweite Ausführungsform des vorschlagsgemäßen Gewebeteils 1. Das Gewebeteil 1 ist hier insbesondere in der Form oder Art eines sogenannten Doppel-Keders bzw. Doppel-Keder-Profils ausgebildet,

Gegenüber der ersten Ausführungsform unterscheidet sich die zweite Ausführungsform dadurch, daß eine zusätzliche Seele 5 in einem zusätzlichen Schlauchabschnitt 6 aufgenommen ist, der sich an die freie Längskante des Flächenabschnitts 4 anschließt.

Der zusätzliche Schlauchabschnitt 6 ist vorzugsweise wiederum in einem Arbeitsschritt bzw. einstückig mit dem Flächenabschnitt 4 gewebt.

Auch die zusätzliche Seele 5 ist vorzugsweise wiederum direkt in den zusätzlichen Schlauchabschnitt 6 eingewebt.

Ein besonderer Vorteil der vorschlagsgemäßen Ausbildung und des vorschlagsgemäßen Verfahrens liegt darin, daß der Abstand der beiden Schlauchabschnitte 3, 6 bzw. die Breite des Flächenabschnitts 4 sehr leicht variiert und im Gegensatz zum Stand der Technik insbesondere wesentlich kleiner (beispielsweise nur mit einer Breite von etwa 2 bis 4 mm oder lediglich aus zwei Kettfäden) ausgebildet werden kann.

Insbesondere kann der Flächenabschnitt 4 bei der zweiten Ausführungsform quasi nur noch einen Verbindungsabschnitt darstellen bzw. nur noch die beiden Schlauchabschnitte 3 miteinander verbinden, also nicht wie insbesondere bei der ersten Ausführungsform einen zumindest im wesentlichen flächigen oder ebenen Bereich bilden.

Generell ist anzumerken, daß das vorschlagsgemäße Gewebeteil 1 und das vorschlagsgemäße Verfahren zur Herstellung des Gewebeteils 1 vielfältige Variationen und Anpassungen ermöglichen, beispielsweise durch Wahl von Anzahl, Stärke und/oder Material der Kettfäden bzw. -garne, des Schußfadens bzw. -garns und/oder des Abbindefadens bzw. -garns sowie der Fäden bzw. Garne oder sonstigen Elemente, aus denen die Seele 2 bzw. Seelen 2, 5 hergestellt werden.

Bei der zweiten Ausführungsform sind die Seelen 2 und 5 vorzugsweise gleich dick und/oder aus den gleichen Materialien aufgebaut. Jedoch können die Seelen 2 und 5 auch unterschiedlich ausgebildet werden.

Aus dem Vorgenannten ergibt sich, daß das vorschlagsgemäße Gewebeteil 1 sehr einfach, schnell und kostengünstig, insbesondere nur durch Weben, herstellbar ist.

Es ist anzumerken, daß die Seele 2 bzw. 5 jeweils vorzugsweise sehr stramm bzw. fest umwebt oder eingewebt ist. Insbesondere weist der jeweilige Schlauchabschnitt 3 bzw. 6 eine sehr hohe Webdichte und/oder Schußzahl auf.

Besonders bevorzugt weisen der Schlauchabschnitt 3 bzw, 6 sowie der Flächenabschnitt 4 die gleiche Webdichte und/oder Schußzahl bzw. die gleiche Festigkeit auf.

## Patentansprüche

1. Gewebeteil (1) mit einer Seele (2), wobei das Gewebeteil (1) einen gewebten Schlauchabschnitt (3), in dem die Seele (2) aufgenommen ist, aufweist,
**dadurch gekennzeichnet,**
**daß** die Seele (2) in dem Schlauchabschnitt (3) eingewebt ist.

2. Gewebeteil nach Anspruch 1, **dadurch gekennzeichnet, daß** der Schlauchabschnitt (3) längsseitig zugewebt ist.

3. Gewebeteil nach Anspruch 1 oder 2, **dadurch gekennzeichnet, daß** der Schlauchabschnitt (3) rund- oder schlauchgewebt ist.

4. Gewebeteil nach einem der voranstehenden Ansprüche, **dadurch gekennzeichnet, daß** das Gewebeteil (1) einen an den Schlauchabschnitt (3) seitlich angewebten Flächenabschnitt (4) aufweist, insbesondere wobei der Schlauchabschnitt (3) längsseitig durch das Flächenstück (4) geschlossen ist.

5. Gewebeteil nach einem der voranstehenden Ansprüche, **dadurch gekennzeichnet, daß** das Gewebeteil (1) nahtlos ausgebildet ist.

6. Gewebeteil nach einem der voranstehenden Ansprüche, **dadurch gekennzeichnet, daß** die Seele (2) aus einer Packung oder mehreren Garnen, Filamenten oder sonstigen Einzelelementen aufgebaut ist,

7. Gewebeteil nach einem der voranstehenden Ansprüche, **dadurch gekennzeichnet, daß** das Gewebeteil (1) einstückig ausgebildet ist.

8. Gewebeteil nach einem der voranstehenden Ansprüche, **dadurch gekennzeichnet, daß** das Gewebeteil (1) nur durch Weben hergestellt ist.

9. Gewebeteil nach einem der voranstehenden Ansprüche, **dadurch gekennzeichnet, daß** das Gewebeteil (1) eine zusätzliche Seele (5) in einem zusätzlichen Schlauchabschnitt (6) aufweist, insbesondere wobei die zusätzliche Seele (5) in den zusätzlichen Schlauchabschnitt (6) eingewebt ist und/oder insbesondere wobei der zusätzliche Schlauchabschnitt (6) längsseitig zugewebt ist,

10. Gewebeteil nach Anspruch 9, **dadurch gekennzeichnet, daß** der zusätzliche Schlauchabschnitt (6) rund- oder schlauchgewebt ist.

11. Gewebeteil nach Anspruch 9 oder 10, **dadurch gekennzeichnet, daß** das Gewebeteil (1) einen an den zusätzlichen Schlauchabschnitt (3) seitlich angewebten Flächenabschnitt (4) aufweist, insbesondere wobei der zusätzliche Schlauchabschnitt (6) längsseitig durch das Flächenstück (4) geschlossen ist.

12. Gewebeteil nach Anspruch 4 oder 11, **dadurch gekennzeichnet, daß** das Flächenstück (4) mit Ripsbindung, insbesondere Querrips, gewebt ist.

13. Gewebeteil nach einem der voranstehenden Ansprüche, **dadurch gekennzeichnet, daß** das Gewebeteil (1) als Doppelkeder oder fähnenprofilartig ausgebildet ist.

14. Gewebeteil nach einem der voranstehenden Ansprüche, **dadurch gekennzeichnet, daß** das Gewebeteil (1) als Dichtung ausgebildet ist.

15. Verfahren zur Herstellung eines insbesondere gemäß einem der voranstehenden Ansprüche ausgebildeten Gewebeteils (1), wobei eine Seele (2) in einen Schlauchabschnitt (3) eingewebt und gleichzeitig ein Flächenabschnitt (4) seitlich an den Schlauchabschnitt (3) angewebt wird.
